Europäisches Patentamt

European Patent Office

Office européen des brevets

(19)

(11) Numéro de publication: **0 188 175**
**B1**

(12) **FASCICULE DE BREVET EUROPEEN**

(45) Date de publication du fascicule du brevet: **07.11.90**

(51) Int. Cl.⁵: **G 01 L 23/06,** G 01 G 23/32,
G 01 G 23/37

(21) Numéro de dépôt: **85810613.1**

(22) Date de dépôt: **23.12.85**

(54) **Appareil de mesure et d'enregistrement de forces.**

(30) Priorité: **17.01.85 CH 244/85**

(43) Date de publication de la demande:
**23.07.86 Bulletin 86/30**

(45) Mention de la délivrance du brevet:
**07.11.90 Bulletin 90/45**

(84) Etats contractants désignés:
**AT BE CH DE FR GB IT LI LU NL SE**

(56) Documents cités:
**DE-A-2 825 095**
**DE-A-3 324 733**
**FR-A-2 373 092**
**US-A-4 301 879**
**US-A-4 366 873**

(73) Titulaire: **S.C.A.I.M.E.**
**Route de Thonon Juvigny**
**F-74100 Annemasse (FR)**

(72) Inventeur: **Mairot, Guy**
**35 chemin de la Praz Vétraz-Monthoux**
**F-74100 Annemasse (FR)**

(74) Mandataire: **Vuille, Roman et al**
**c/o KIRKER & Cie S.A. 14, rue du Mont-Blanc**
**Case Postale 872**
**CH-1211 Genève 1 (CH)**

Courier Press, Leamington Spa, England.

**Description**

On connaît déjà des appareils de mesure de forces tels que des poids qui comportent un dispositif mémorisant des poids mesurés (par exemple les poids successifs d'une personne au cours d'un certain laps de temps) et déterminant l'écart par rapport à une valeur de poids donnée (valeur de consigne ou valeur idéale). Toutefois, ces appareils connus ne peuvent indiquer que des valeurs d'écart numérique entre la valeur mesurée et une valeur de référence, ce qui est insuffisant, notamment lorsqu'il s'agit d'un appareil pèsepersonnes, car ce qui est utile pour l'usager — et son médecin —, ce n'est pas tant la valeur d'un tel écart que de pouvoir observer et évaluer l'évolution des valeurs successivement mesurées au cours d'un certain laps de temps.

Le brevet US 4.301.879 décrit un pèse-personnes mportant des moyens pour mémoriser des valeurs individuelles successives de poids et pour afficher à volonté, sous forme de points ou d'une ligne joignant des points, les valeurs successives du poids de la personne pendant une durée choisie. L'affichage de valeurs mesurées donne bien une idée de l'allure de l'évolution du poids de la personne en fonction du temps pendant la durée choisie, mais, d'une part, les écarts entre les mesures successives prennent beaucoup d'importance relative et, d'autre part, si l'on veut avoir une vue d'ensemble sur une longue période, le nombre des valeurs affichées ne facilite pas l'identification de la tendance.

Selon la présente invention, on remédie à cet inconvénient en limitant l'affichage de valeurs individuelles aux courtes durées (p.ex. valeurs quotidiennes pendant une semaine) et en calculant et affichant des valeurs moyennes lorsqu'on veut voir la tendance sur une plus longue durée (p.ex. moyennes hebdomadaires successives pour un certain nombre de semaines et moyennes mensuelles successives ou annuelles pour de plus longues périodes). Ainsi l'effet gênant des variations au jour le jour est éliminé et l'appareil affiche une représentation de la tendance qui est tout à fait claire du fait que les irrégularités au jour le jour ont disparu.

La présente invention a pour objet un appareil de mesure et d'enregistrement de forces — notamment mais pas exclusivement de poids — qui est conforme à la revendication 1.

Le dessin annexé représente, schématiquement et à titre d'exemple, une forme d'exécution de l'appareil selon l'invention.

La fig. 1 en est une vue d'ensemble.

La fig. 2 est une vue en coupe schématique du dispositif de mesure de force que comprend l'appareil selon la fig. 1.

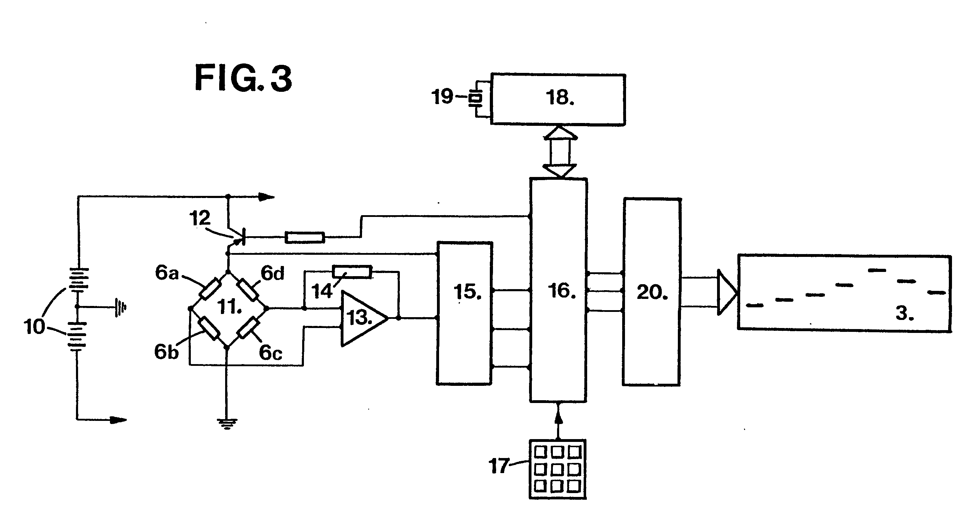

La fig. 3 est un schéma bloc de la partie électrique du dispositif de mesure de force selon la fig. 1 et du dispositif de commande et de calcul que comprend l'appareil selon la fig. 1.

La fig. 4 montre à plus grande échelle la disposition du clavier de commande visible sur la fig. 3.

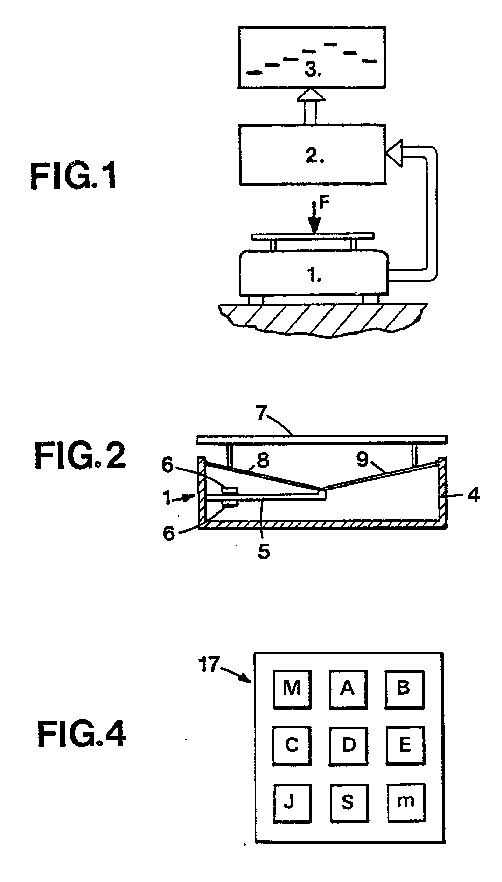

L'appareil illustré schématiquement par la fig. 1 comprend un dispositif 1 de mesure d'une force F qui lui est appliquée. Il peut s'agir, par exemple, d'un dispositif pèse-personne et, dans ce cas, la force F est le poids actuel de la personne qui est montée sur son plateau récepteur.

Il comprend aussi un dispositif 2 de commande et de calcul qui est en liaison fonctionnelle avec le dispositif 1, qui lui communique sous forme électrique les valeurs successives des forces (poids) qu'il mesure.

Il comprend encore un dispositif 3 d'affichage graphique qui est commandé par le dispositif 2, pour fournir à l'usager une représentation graphique de la valeur actuelle de son poids et de l'évolution de son poids au cours d'une certaine durée (semaine, mois, trimestre, année, par exemple) précédant la dernière mesure effectuée.

Admettant que le dispositif 1 est, dans cet exemple, un pèse-personne, on voit sur la fig. 2, qui en est une vue en coupe très schématique, un bâti 4 dans lequel est disposé un transducteur à jauges de contrainte se présentant sous la forme d'une poutre de flexion 5, encastrée à l'une de ses extrémités sur le bâti 4 et dont l'autre extrémité est libre. Des jauges de contrainte indiquées en 6 sont fixées les unes sur la face supérieure et les autres sur la face inférieure de la poutre 5. On indiquera plus loin la disposition de ces jauges, qui sont au nombre de quatre.

Le pèse-personne illustré par la fig. 2 comprend un plateau récepteur 7 destiné à recevoir la personne désirant se peser. Ce plateau agit, par l'intermédiaire de leviers 8, 9, sur la poutre 5, en un endroit proche de son extrémité libre.

On comprend sans plus d'explications que le dispositif 1 fournit au dispositif 2, sous forme électrique et analogique, la valeur de chaque poids placé sur son plateau récepteur 7.

On va décrire maintenant le dispositif 2 de commande et de calcul, ainsi que son fonctionnement.

On voit en 10 une source de tension continue alimentant l'ensemble de l'appareil. Les quatre jauges de contrainte (6 sur la fig. 2) sont indiquées en 6a, 6b, 6d, 6e. Comme on le voit, elles sont montées électriquement pour former un pont de résistances 11, Le pont 11, un transistor 12, un amplificateur opérationnel 13 avec sa résistance de contre-réaction 14, avec un circuit 15 qui constitue, en liaison avec un microprocesseur 16, un convertisseur analogique/numérique, permettent de fournir en valeurs numériques les charges appliquées, sur le plateau 7, pour permettre le traitement ultérieur que l'on va indiquer plus loin. Le convertisseur peut être, par exemple, du type décrit dans le brevet français No. 798100582 (EP-A1-7288).

Le microprocesseur 16 a pour fonction d'assurer le pilotage de l'ensemble du circuit de l'appareil. Il comprend une horloge, des mémoires de programmes, des mémoires de données, une unité centrale pour effectuer différentes opérations arithmétiques et logiques, des registres et des liaisons connectées avec des composants externes et capables de commander ces composants et/ou de recevoir des informations en provenance de ces composants, comme on le verra plus loin. Tous éléments du microprocesseur étant bien connus de l'homme du métier, ils n'ont pas été représentés, pour ne pas compliquer inutilement le dessin.

Le microprocesseur 16 peut être, par exemple, du type UPD 7508A de N.E.C.

Un clavier 17, travaillant en liaison avec le microprocesseur 16, permet d'introduire un certain nombre de données, comme il sera indiqué dans la description du fonctionnement. Ce clavier sera décrit plus loin, en référence à la fig. 4. Il comporte des touches A, B, C, D, E correspondant aux différentes personnes pouvant utiliser l'appareil, et des touches m, J, S et un circuit 18 de gestion du temps fournit au microprocesseur 16 l'heure et la date du moment de chaque pesée. Ce circuit 18 peut être, par exemple, du type UPD 1990 de N.E.C. Il fonctionne en liaison avec un quartz base de temps 19.

Le dispositif 2 comprend aussi un circuit 20, connecté au microprocesseur 16. Ce circuit, qui peut être du type UPD 7225 de N.E.C., commande le dispositif d'affichage graphique 3, qui peut être, par exemple, du type à cristaux liquides.

Le fonctionnement de l'appareil est le suivant.

Les programmes des différents modes possibles d'utilisation de l'appareil sont enregistrés dans les mémoires de programmes, en dernière phase de fabrication.

L'utilisateur, avant de monter sur le plateau 7, met en fonctionnement l'appareil en appuyant sur la touche M du clavier 17. L'appareil fait alors automatiquement son zéro et sur l'afficheur 3 apparaît 0.0., ce qui signifie qu'une pesée peut commencer; l'utilisateur monte alors sur le plateau et le résultat de la pesée apparaît en valeur numérique sur l'afficheur 3. L'utilisateur actionne alors, sur le clavier 17, celle des touches A, B, C, D, E qui lui est attribuée, ce qui a pour effet de sélectionner une zone mémoire de données correspondante (dans l'exemple présenté, on dispose de 5 zones mémoire de données, mais il est bien évident que ce nombre pourrait être différent). A chaque individu est affectée une zone mémoire de données. Le poids présent sur le plateau est alors mis en mémoire, dans la mémoire de données du microprocesseur 16. Cette mise en mémoire s'effectue en liaison avec le circuit de gestion de temps 18.

En effet, pour une même personne, il n'est mis en mémoire qu'une seule mesure par 24 heures. Si plusieurs pesées interviennent pour une même personne par 24 heures, seule la dernière est retenue par l'appareil.

Pour faire apparaître la courbe correspondant à la zone mémoire sélectionnée, il faut alors actionner l'une des touches J, S, m qui correspondent respectivement aux jours, semaines et mois.

Le fait d'actionner la touche J fait apparaître sur l'afficheur 3 la courbe correspondant aux poids enregistrés les 7 derniers jours.

Le fait d'actionner la touche S fait apparaître sur l'afficheur 3 la courbe correspondant aux moyennes des poids des 7 dernières semaines. La valeur du poids affectée à une semaine correspond à la moyenne des poids enregistrés pendant la semaine considérée.

Le fait d'actionner la touche m fait apparaître sur l'afficheur 3 la courbe correspondant aux moyennes des poids des 7 derniers mois. La valeur du poids affectée à un mois correspond à la moyenne des poids enregistrés pendant le mois considéré.

Les moyennes ci-dessus citées sont calculées par le microprocesseur 16 et stockées dans la mémoire de données de ce microprocesseur.

Le dispositif de mesure 1 est posé sur le sol. Le dispositif de commande et de calcul 2 et le dispositif d'affichage peuvent être intégrés au dispositif 1, soit au sommet d'une colonne venant du dispositif 1, soit être fixés ensemble sur un mur et reliés électriquement au dispositif 1.

Dans l'exemple que montre le dessin, les poids successifs mesurés (s'il s'agit d'un affichage pour une période d'une semaine) apparaissent sous forme de 7 petits traits horizontaux correspondant chacun à un jour. Le dernier poids mesuré apparaît aussi en valeur numérique, dans un coin de l'écran.

Lorsque l'on veut avoir une vue plus étendue de l'évolution du poids, au cours de 7 semaines successives, le programme correspondant fait calculer la moyenne des pesées pour chaque semaine et fait afficher, sous forme de 7 petits traits horizontaux, les 7 valeurs moyennes de ces 7 dernières semaines. De même, on peut afficher les moyennes mensuelles des 7 derniers mois.

Si l'utilisateur veut connaître l'évolution de son poids, non pas simplement sous forme de valeurs successives, mais par rapport à une valeur idéale correspondant à son sexe, son âge, et sa taille, il peut faire entrer en mémoire cette valeur idéale au moyen d'un clavier numérique non représenté, ce qui fera apparaître sur l'écran du dispositif 3, en plus de la courbe de poids, une ligne horizontale représentant le poids idéal, ce qui permettra à l'usager de se situer par rapport à ce poids idéal.

La conversion analogique/numérique peut être faite à choix selon le système décimal, soit selon le système anglo-saxon.

Le dispositif d'affichage 3 pourrait être un écran du type cathodique ou une imprimante.

Bien que l'exemple représenté et décrit concerne un pèse-personne ou un pèse-bébé, l'invention n'est pas limitée à un appareil de mesure de poids. D'une façon générale, l'invention concerne la mesure de forces. Dans un autre exemple, il pourrait s'agir de la mesure de l'effort développé sur un appareil de culture physique et de la représentation graphique de valeurs successives mesurées ou de moyennes de ces valeurs.

## Revendications

1. Appareil de mesure, d'enregistrement et d'affichage graphique de forces, comprenant des moyens de mesure de forces (I, 5), des moyens (6) pour convertir les forces mesurées en signaux électriques, des moyens d'affichage (3), un microprocesseur (16) commandé par ces signaux électriques et comprenant une unité centrale pour effectuer des opérations arithmétiques, pour calculer des moyennes des valeurs mesurées sur des périodes de durées différentes, des mémoires de programmes relatifs aux différents modes d'utilisation de l'appareil, et des mémoires de données prévues pour enregistrer plusieurs séries de valeurs de forces successives, une au moins de ces séries étant formée de valeurs journalières successives mesurées, et les autres séries étant formées chacune de valeurs moyennes successives calculées par le microprocesseur (16) pour une périodicité fixée d'avance, un moyen de commande (17: J, S, m) étant prévu pour faire afficher sélectivement par le dispositif d'affichage (3), les valeurs mémorisées des n dernières valeurs de forces mesurées et des n dernières valeurs moyennes calculées par le microprocesseur (16) pour chacune des différentes périodicités prévues.

2. Appareil selon la revendication 1, caractérisé en ce que les périodicités sont des semaines et des mois.

3. Appareil selon la revendication 1, caractérisé en ce qu'il comporte une base de temps (18, 19) pour commander les différentes périodicités de valeurs moyennes de forces à mémoriser dans les mémoires de données et à afficher par les moyens d'affichage (3).

4. Appareil selon la revendication 3, caractérisé en ce qu'il comporte des moyens (3) pour afficher en même temps les valeurs de forces mémorisées et une valeur de consigne choisie, pour mettre en évidence un écart éventuel entre les valeurs réelles et la valeur de consigne.

## Patentansprüche

1. Apparat zur Messung, Registrierung und graphischer Anzeige von Kräften folgender Teile umfassend:

Mittel zur Messung der Kräfte (1, 5),

Mittel (6) zur Umwandlung der Kräftemessungen in elektrischen Signalen,

Anzeigemittel (3), einen Microprozessor (16), der von diesen elektrischen Signalen gesteuert ist und folgende Teile umfassend:

eine Zentraleinheit um die arithmetischen Operationen auszuführen, um Mittelwerte der gemessenen Werte über Zeitabschnitte verschiedener Dauer zu bilden,

Speicher mit den programmen für die verschiedenen Betriebsarten des Apparates und

Datenspeicher für die Registrierung von mehreren Serien von sich folgenden Kräften, wobei eine mindestens dieser Serien aus den täglichen sich folgenden gemessenen Werten gebildet ist, und die anderen Serien je aus den sich folgenden Mittelwerten, die von Microprozessor (16) für eine zum voraus festgelegte Periodizität berechnet werden,

wobei ein Steuermittel (17: J, S, m) vorgesehen ist um selektiv am Anzeigemittel (3) die gespeicherten Werte der n letzten Werte der gemessenen Kräfte und der n letzten vom Microprozessor (16) für jede der verschiedenen vorgesehenen Periodizitäten berechneten Mittelwerten auzuzeigen.

2. Apparat gemäss Anspruch 1, dadurch gekennzeichnet, dass die Intervallen der Periodizitäten Wochen und Monate sind.

3. Apparat gemäss Anspruch 1, dadurch gekennzeichnet, dass er eine Zeitbasis (18, 19) enthält, um die verschiedenen Periodizitäten zur Bildung der Kräfte, Mittelwerte, die in den Datenspeichern zu speichern und in den Anzeigemitteln (3) anzuzeigen sind, zu steuern.

4. Apparat gemäss Anspruch 3, dadurch gekennzeichnet, dass er Mittel (3) umfasst um gleichzeitig mit den Werten der gespeicherten Kräften einen gewählten Sollwert anzuzeigen, um auf eine eventuelle Abweichung der effektiven Werten vom Sollwert aufmerksam zu machen.

## Claims

1. An instrument for the measurement, recording and graphical display of forces, comprising means (1, 5) for measuring forces, means (8) for converting the measured forces into electrical signals, display means (3), a microprocessor (16) controlled by these electrical signals and comprising a central unit for performing arithmetical operations in order to calculate averages of the measured values over periods of different durations, memories for programs relating to the different modes of use of the instrument, and data memories provided for recording several series of successive force values, at least one of these series being formed of successive measured daily values and the other series each being formed of successive average values calculated by the microprocessor (16) for a preset periodicity, a control means (17: J, S, m) being provided for selectively displaying, by way of the display device (3), the stored values of ths last n measured force values and of the last n average values calculated by the microprocessor (16) for each of the different preset periodicities.

2. An instrument according to Claim 1, characterized in that the periodicities are weeks and months.

3. An instrument according to Claim 1, characterized in that it comprises a time base (18, 19) for controlling the different periodicities of average force values to be stored in the data memories and to be displayed by way of the display means (3).

4. An instrument according to Claim 3, characterized in that it comprises means (3) for simultaneously displaying ths stored force values and a chosen set value in order to show any difference between the actual values and the set value.

**FIG.1**

**FIG.2**

**FIG.4**

FIG.3

EP 0 188 175 B1